# EUROPÄISCHE PATENTSCHRIFT

(11) **EP 2 974 584 B1**
(45) Veröffentlichungstag und Bekanntmachung des Hinweises auf die Patenterteilung: **04.04.2018**
(21) Anmeldenummer: 15401071.4
(22) Anmeldetag: 09.07.2015
(51) Int. Cl.: A01C 7/04, A01C 7/20

(54) **VORRICHTUNG UND VERFAHREN ZUR HOCHFREQUENTEN SAATGUTVEREINZELUNG**
DEVICE AND METHOD FOR HIGH-FREQUENCY SEED SEPARATION
DISPOSITIF ET PROCÉDÉ DE SEPARATION A HAUTES FREQUENCES DE SEMENCES

(30) Priorität: 17.07.2014 DE 102014110038
(43) Veröffentlichungstag der Anmeldung: 20.01.2016
(73) Patentinhaber: Amazonen-Werke H. Dreyer GmbH & Co. KG, 49205 Hasbergen (DE)
(72) Erfinder: DREYER, Justus, 49076 Osnabrück (DE); JOHANNABER, Stefan Jan, 49536 Lienen (DE); TECKEMEYER, Stephan, 49504 Lotte (DE)

(56) Entgegenhaltungen:
- EP-A1- 0 037 775
- WO-A1-2009/153646
- DE-A1- 2 552 067
- DE-A1- 3 826 397
- DE-C- 420 936
- US-A1- 2004 134 399
- US-B1- 6 481 647

## Beschreibung

Die vorliegende Erfindung betrifft eine Vorrichtung und ein Verfahren zur Vereinzelung und gezielten Ablage von körnigem Gut, insbesondere von Samenkörnern und/oder Dünger, die auch für Saatgut mit hoher Ablagedichte, wie beispielsweise Getreide, die Vereinzelungsqualität einer Einzelkorndosierung ermöglichen.

Verteilvorrichtungen für körniges Gut, wie insbesondere Sämaschinen, sind in zahlreichen Ausführungsvarianten bekannt. Herkömmlicherweise erfolgt die Kornförderung mit Hilfe eines Luftstroms, dem die Körner zu dosiert werden. Anschließend wird der als Trägermedium dienende Luftstrom einem Verteiler zugeführt, der in eine Mehrzahl von Schlauchleitungen münden kann, die schließlich in nebeneinander angeordneten Scharen der Sämaschine enden können. Da die Stetigkeit der Kornzuführung während des luftunterstützten Transports im Allgemeinen mehr oder weniger beeinträchtigt ist, erfolgt die Kornablage an den Säscharen oftmals ungleichmäßig, was zu Nachteilen bei der Standraumzuteilung der einzelnen Pflanzen führen kann.

Um die Standraumzuteilung der Pflanzen der jeweiligen Pflanzenart optimal anzupassen, versucht man daher, die Samenkörner vor der Zufuhr zu den Ablageleitungen zu vereinzeln. In der DE 10 2012 105 048 wird beispielsweise eine rotierende Fördereinrichtung beschrieben, die mit einer Gehäuseinnenfläche eine Tasche bildet, in die die Körner gedrängt und durch Zentrifugalkräfte, unterstützt durch die Fördereinrichtung, kreisförmig befördert werden. Die DE 10 2012 105 081 beschreibt ein Verteilaggregat mit einem Gehäuse, dessen Innenfläche gewindeförmig ausgebildet ist, und mit einer rotierenden Fördereinrichtung, die die Samenkörner einzeln durch Eingriff mit der Innenfläche des Gehäuses befördert. Die beschriebenen Verteilaggregate sollen somit einen volumetrisch dosierten Saatgutstrom derart vereinzeln, dass die Vereinzelungsqualität einer Einzelkorndosierung angenähert werden kann. Die beschriebenen Verfahren eignen sich dabei für Saatgut mit relativ geringer Ablagedichte, wie beispielsweise Mais.

Die US 6,481,647 beschreibt eine Einzelkornsävorrichtung gemäß dem Oberbegriff des Anspruchs 1, bei der die vereinzelten Körner mittels Zentrifugalkraft nach außen bewegt und hierbei beschleunigt werden.

Für Getreide wie Weizen, Gerste oder Hafer sind jedoch deutlich höhere Ablagedichten erforderlich, die mit den im Stand der Technik bekannten Verfahren nicht zuverlässig erreicht werden können. Entweder ist die Ablagefrequenz aufgrund der konventionellen Vereinzelungsvorrichtungen auf 30 bis 35 Körner pro Sekunde begrenzt oder es wird eine aufwändige Vorbehandlungen des Saatguts zur Vordosierung und/oder Vorbeschleunigung benötigt, um eine zuverlässige Vergleichmäßigung des Saatguts zu garantieren. Ein Verspringen des Saatguts durch Unregelmäßigkeiten des Ackerbodens im Bereich des Säschars führt zu nicht idealer Standraumzuteilung.

Es liegt somit der vorliegenden Erfindung die Aufgabe zugrunde, eine Vorrichtung und ein Verfahren zur Vereinzelung und gezielten Ablage von körnigem Gut, insbesondere von Getreide, zur Verfügung zu stellen, die die oben genannten Nachteile überwinden. Ganz allgemein liegt der vorliegenden Erfindung die Aufgabe zugrunde, körniges Saatgut hochfrequent zu vereinzeln und eine hohe Längsverteilungsqualität in Bezug auf die auszubringenden Saatreihen zu erreichen.

Die oben genannten Aufgaben werden gelöst durch eine Einzelkornsävorrichtung zur gezielten Ablage von körnigem Gut, insbesondere von Samenkörnern und/oder Dünger, mit mindestens einer Vereinzelungseinheit, die aus einem Gutstrom eine Abfolge von einzelnen Körnern erzeugt und an eine Ablageeinheit, insbesondere an einen Säschar, weitergibt, wobei zwischen der Vereinzelungseinheit und der Ablageeinheit eine Beschleunigungseinheit angeordnet ist, die die vereinzelten Körner von der Vereinzelungseinheit übernimmt, unter Rotation beschleunigt und an die Ablageeinheit weitergibt.

Die Einzelkornsävorrichtung kann als Teil einer Sämaschine oder Drillmaschine zum Aussäen von körnigem Gut vorgesehen sein. Insbesondere können mehrere nebeneinander angeordnete, gleichartige Einzelkornsävorrichtungen als Teil einer Verteil- oder Sämaschine vorgesehen sein. Bei dem körnigen Gut kann es sich wie erwähnt insbesondere um Samenkörner, aber auch um Dünger handeln. Die im Folgenden beschriebene Vorrichtung ist besonders vorteilhaft bei der Aussaat von Getreide mit einer Tausendkornmasse von ca. 30 bis ca. 55 Gramm einsetzbar. Um eine wirtschaftliche Aussaat zu erlauben, muss das Getreide als volumetrisch dosierter Saatstrom mit hoher Vereinzelungsqualität und hoher Ablagefrequenz an die Ablageeinheit, beispielsweise einen Säschar übergeben werden. Die Ablageeinheit kann zusätzlich Schlauchleitungen, die in nebeneinander angeordneten Scharen der Sämaschine enden, umfassen.

Erfindungsgemäß weist die Vorrichtung mindestens eine Vereinzelungseinheit auf, die dazu ausgebildet ist, aus einem Strom des körnigen Guts eine Abfolge von einzelnen Körnern zu erzeugen. Beispiele für Vereinzelungseinheiten sind die weiter unten beschriebenen Vereinzelungsscheiben bzw. Vereinzelungstrommeln. Alternative Vereinzelungseinheiten, wie oben im Stand der Technik beschrieben, sind jedoch ebenso anwendbar. Der Gutstrom kann der Vereinzelungseinheit insbesondere aus einem Vorratsbehälter für das körnige Gut, beispielsweise per Lufttransport, zugeführt werden. Nachdem mithilfe der Vereinzelungseinheit eine Abfolge von einzelnen Körnern erzeugt wurde, werden die Körner einzeln an die oben erwähnte Ablageeinheit weitergegeben und von dieser einzeln, und somit gezielt, abgelegt.

Der Grundgedanke der vorliegenden Vorrichtung besteht darin, das Saatgut vor der Weitergabe an die Ablageeinheit zu beschleunigen, um Positionsvariationen in der Abgabe gering zu halten und die Förderwege zu den Scharen in möglichst kurzer Zeit zurückzulegen. Dies ist eine Voraussetzung für das Erreichen eines geringen Variationskoeffizienten der Längsverteilung des abgelegten Saatguts. Aus diesem Grund ist bei der erfindungsgemäßen Vorrichtung eine Beschleunigungseinheit zwischen der Vereinzelungseinheit und der Ablageeinheit angeordnet, die dazu ausgebildet ist, die vereinzelten Körner von der Vereinzelungseinheit zu übernehmen, unter Rotation zu beschleunigen und an die Ablageeinheit weiterzugeben. Das Übergeben der vereinzelten Körner an die Beschleunigungseinheit kann dabei mittels einer speziellen Übergabeeinheit erfolgen, die dazu ausgebildet ist, einzelne Körner mit vorgegebener Frequenz von der oder den Vereinzelungseinheiten an die Beschleunigungseinheit zu übergeben.

Durch die Beschleunigung werden die abzulegenden Körner räumlich auseinander gezogen, d. h. der räumliche Abstand zwischen zwei aufeinanderfolgenden Körnern entlang des Förderweges wird vergrößert.

Im Allgemeinen ist die Geschwindigkeit, mit der Samenkörner aus einem ruhenden Saatgutvorrat entnommen werden können, technisch derart begrenzt, dass sie weit unterhalb der gewünschten Abgabegeschwindigkeit liegt. Beispielsweise lassen sich die Drehzahlen von Lochscheiben oder -trommeln als Vereinzelungseinheiten nicht beliebig erhöhen, da sonst kein sicheres Aufnehmen der Samenkörner aus dem Saatgutvorrat mehr garantiert werden kann. Herkömmliche Lochscheiben können z. B. nur mit einer Frequenz rotieren, die die Abgabe von bis zu 30 Körnern pro Sekunde erlaubt.

Höhere Abgabegeschwindigkeiten sind aber unter anderem wünschenswert, um ein Verspringen der abgelegten Samenkörner in der Saatfurche zu vermeiden. Bei hohen Abgabegeschwindigkeiten werden auch lange Förderwege und Abgabepositionstoleranzen schneller überbrückt. Die Gefahr des Verspringens des Kornes in der Saatfurche kann nötigenfalls durch eine bekannte Saatgutfangrolle vermieden werden. Außerdem können aufgrund des größeren geometrischen Abstands auch Körner mehrerer Lochscheiben und/oder Lochreihen (siehe unten) mit einer einzigen Sävorrichtung, d. h. entlang derselben Saatreihe, mit derselben Geschwindigkeit abgeben werden. Auf diese Weise lässt sich die Abgabefrequenz einer gewöhnlichen Vereinzelungseinheit vervielfachen. Die von der oder den Vereinzelungseinheiten übernommenen Körner werden dazu von der Beschleunigungseinheit durch Rotation beschleunigt, um dann durch die Zentrifugalkraft an die nachgeschaltete Ablageeinheit weitergegeben zu werden.

Gemäß einer Weiterbildung kann die Vereinzelungseinheit mindestens zwei Lochreihen zum Erzeugen der Abfolge von einzelnen Körnern aufweisen. Die Vereinzelungseinheit kann beispielsweise scheibenförmig als Vereinzelungsscheibe oder trommelförmig als Vereinzelungstrommel (siehe unten) ausgebildet sein. Die mindestens zwei Lochreihen sind dabei derart in Umfangsrichtung der Vereinzelungseinheit angeordnet, dass jede Lochreihe eine Vielzahl von in gleichmäßigen Abständen angeordneten Löchern aufweist, deren Form den aufzunehmenden Körnern angepasst ist. Von der Vereinzelungseinheit werden bei Rotation an den Löchern der Lochreihen Körner aus einem Gutstrom aufgenommen. Nach Bedarf vorgesehene Abstreifelemente sorgen dafür, dass von jedem Loch nur ein Korn aufgenommen wird. Beispielsweise können die Lochreihen der Vereinzelungseinheit in einen Vorratsbehälter mit Saatgut eintauchen, wobei überschüssige Körner durch den Abstreifer dem Vorratsbehälter wieder zugeführt werden können.

Die Aufnahme der Körner aus dem Gutstrom kann beispielsweise durch Saugdruck erfolgen. Dazu kann die Vereinzelungseinheit derart mit einem Druckbehälter und einer Pumpeinrichtung verbunden werden, dass der Luftdruck auf einer Seite der Löcher höher als auf der gegenüberliegenden Seite ist. Sowohl Unterdruck- als auch Überdruckbehälter können dabei zum Einsatz kommen. Durch den Druckunterschied wird das aufzunehmende Korn an das jeweilige Loch gebunden, so dass es selbst bei Rotation der Vereinzelungseinheit sicher transportiert werden kann. Aufgrund des verwendeten Druckunterschieds ergibt sich jedoch eine maximale Rotationsgeschwindigkeit der Vereinzelungseinheit, oberhalb derer die Fliehkraft zu einer Abtrennung des transportierten Korns führen würde.

Die Übergabe der vereinzelten Körner kann durch Unterbrechung des Druckunterschieds erfolgen. Dazu kann beispielsweise ein feststehendes Element durch die Rotation der Vereinzelungseinheit vor die dem Korn abgewandte Seite des Korns gebracht werden, sodass diese verschlossen wird. Das transportierte Korn erfährt damit keinen Saugdruck mehr und fällt aufgrund der Schwerkraft in eine entsprechend vorgesehene Öffnung der Beschleunigungseinheit. Das feststehende Element bildet in diesem Fall einen Teil der Übergabeeinheit. Alternativ oder zusätzlich kann das transportierte Korn auch aktiv übergeben werden, indem ihm an geeigneter Stelle ein entsprechender Impuls übertragen wird. Dies kann beispielsweise mittels eines oder mehrerer vorgespannter Auswerferelemente erfolgen, die über eine der Vereinzelungseinheit zugeordnete Steuerkurve gesteuert werden, und die die transportierten Körner zu präzisen Zeitpunkten impulsartig von den jeweiligen Löchern wegstoßen. Die Auswerferelemente können dabei auf der den Löchern abgewandten Seite der Vereinzelungseinheit angeordnet sein und mittels eines geeignet geformten Stiftes das transportierte Korn durch die Löcher hindurch auswerfen, oder aber auf der Seite der Löcher angeordnet sein und das transportierte Korn impulsartig abstreifen. Um verklemmte Körner oder Kornbruchstücke aus den Löcherbohrungen zu drücken, kann zusätzlich eine Auswerferrolle auf der den Körnern abgewandten Seite angeordnet sein.

Anstelle von mechanischen Auswerferelementen können beispielsweise auch impulsartig arbeitende Druckluftdüsen eingesetzt werden.

Die Lochreihen können nebeneinander oder auch versetzt zueinander angeordnet sein. Dabei können die Steuerkurve und die Auswerferelemente derart ausgebildet sein, dass die Körner abwechselnd von den Lochreihen an die Beschleunigungseinheit übergeben werden. Dadurch können pro Umdrehung einer Vereinzelungseinheit mit zwei Lochreihen doppelt so viele Körner abgegeben werden wie bei einer herkömmlichen Vereinzelungseinheit mit einer Lochreihe. Es versteht sich, dass auch Vereinzelungseinheiten mit drei oder mehr Lochreihen möglich sind. Entsprechend erhöhen sich in diesem Fall die Anzahl der Auswerferelemente, die Rotationsfrequenz der unten beschriebenen Fördereinrichtung und die durch die maximale Rotationsfrequenz der Vereinzelungseinheit begrenzte maximale Übergabefrequenz der Körner an die Beschleunigungseinheit.

Die Vereinzelungseinheit ist im Allgemeinen an einer von einem, insbesondere regelbaren, Motor angetriebenen Achse gelagert, wobei die Rotationsfrequenz der Vereinzelungseinheit über eine Steuer- und/oder Regeleinrichtung, beispielsweise in Abhängigkeit von der Fahrgeschwindigkeit der Zugmaschine der Sämaschine, geregelt werden kann. Insbesondere kann ein Servomotor zum Antrieb der Vereinzelungseinheit verwendet werden.

Gemäß der Erfindung sind zwei scheibenförmige Vereinzelungseinheiten in Form der oben beschriebenen Vereinzelungsscheiben vorgesehen, wobei die Beschleunigungseinheit zumindest teilweise zwischen den beiden Vereinzelungsscheiben angeordnet sein kann. Insbesondere ist gemäß dieser Weiterbildung die Beschleunigungseinheit derart zumindest teilweise zwischen den beiden Vereinzelungsscheiben angeordnet, dass von den Vereinzelungsscheiben vereinzelte Körner an die Beschleunigungseinheit übergeben werden können. Gemäß einer speziellen Weiterbildung können die beiden Vereinzelungsscheiben koaxial zueinander angeordnet sein, wobei ein Antrieb über eine gemeinsame Lagerung der beiden Vereinzelungsscheiben möglich ist. Die Rotationsachsen der beiden Vereinzelungsscheiben können aber auch versetzt zueinander angeordnet sein. In jedem Fall werden die Körner auf der der Beschleunigungseinheit zugewandten Seite der jeweiligen Vereinzelungsscheibe aufgenommen und transportiert.

Die Beschleunigungseinheit umfasst: ein Gehäuse mit mindestens einer Einlassöffnung zur Übernahme der Körner von der Vereinzelungseinheit; eine Auslassöffnung zur Weitergabe der beschleunigten Körner an die Ablageeinheit; und eine in dem Gehäuse rotierende Fördereinrichtung, die dazu ausgebildet ist, die Körner einzeln von der Einlassöffnung zur Auslassöffnung zu befördern und dabei zu beschleunigen.

Das Gehäuse ist dabei im Allgemeinen bezüglich der rotierenden Fördereinrichtung feststehend und derart ausgebildet, dass die rotierende Fördereinrichtung die übergebenen Körner innerhalb des Gehäuses gezielt führen und beschleunigen kann. Dabei kann das Gehäuse insbesondere pro Vereinzelungseinheit eine oder mehrere Einlassöffnungen zur Übernahme der Körner von der jeweiligen Vereinzelungseinheit aufweisen. Gemäß einer speziellen Weiterbildung kann das Gehäuse für jede Lochreihe eine Einlassöffnung aufweisen, in die die Körner mittels der oben beschriebenen Auswerferelemente impulsartig gestoßen werden können.

Im Allgemeinen weist das Gehäuse selbst bei Vorliegen mehrerer Vereinzelungseinheiten mit mehreren Lochreihen nur eine Auslassöffnung zur Weitergabe der beschleunigten Körner an die Ablageeinheit auf, durch die alle aufgenommenen Körner an die Ablageeinheit weitergegeben werden. Alternative Ausführungen mit mehr als einer Auslassöffnung sind jedoch vorstellbar. Zur effektiven Abgabe der beschleunigten Körner an die Ablageeinheit kann sich ein Schussrohr tangential zur Rotationsbewegung der Fördereinrichtung an die Auslassöffnung anschließen, so dass die beschleunigten Körner aufgrund der Fliehkraft tangential in das Schussrohr ausgeworfen werden.

Die in dem Gehäuse rotierende Fördereinrichtung kann elektromotorisch, hydraulisch oder pneumatisch angetrieben werden. Beispielsweise kann die Fördereinrichtung mit Hilfe eines Luftstroms, der von einer Pumpe erzeugt wird, angetrieben werden. Alternativ kann die Fördereinrichtung mit Hilfe eines, insbesondere regelbaren, Elektromotors, beispielsweise eines Servomotors, über eine Antriebswelle angetrieben werden. Eine Steuer- und/oder Regeleinrichtung kann dabei die Rotationsfrequenz in Abhängigkeit von einer gewünschten Abgabefrequenz der Einzelkörner steuern oder regeln, welche ihrerseits wiederum von der Fahrgeschwindigkeit der Sämaschine und/oder der Rotationsfrequenz der Vereinzelungseinheiten abhängen kann. In jedem Fall wird die rotierende Fördereinrichtung aufgrund der großen Anzahl von Löchern pro Lochreihe mit einer deutlich höheren Rotationsfrequenz als die entsprechenden Vereinzelungseinheiten angetrieben, wodurch eine effektive Beschleunigung der abzulegenden Körner erzielt wird.

Hierbei können verschiedene Ausführungsvarianten vorgesehen sein. Beispielsweise kann ein koaxialgelagerter Beschleuniger, wenn er als Scheibe ausgebildet ist, dass die Scheibe einen Durchmesser von 150 mm und der Innendurchmesser des Beschleunigers größer gleich 150 mm ist. In einer anderen Ausgestaltung kann der Beschleuniger zwischen den Vereinzelungsscheiben angeordnet sein, wobei der Durchmesser der Scheibe dann bei 150 mm und der Durchmesser des Beschleunigers bei 100 mm liegt. Die vor genannten Werte sind Mittelwerte, sie können auch entsprechend nach oben oder unten in geeigneter Form abgewandelt sein.

Beispielsweise kann die Fördereinrichtung derart ausgebildet sein, dass sie pro Umlauf ein Korn an die Ablageeinheit weitergibt. In diesem Fall beträgt die Rotationsfrequenz der Fördereinrichtung ein Vielfaches der Rotationsfrequenz der Vereinzelungseinheit, je nachdem wie viele Vereinzelungseinheiten vorgesehen sind, wie viele Lochreihen diese aufweisen und wie viele Löcher jede Lochreihe besitzt. Beispielsweise kann die Rotationsfrequenz der Beschleunigungseinheit bei zwei Vereinzelungsscheiben mit je zwei Lochreihen ä **N** Löchern das 4N-fache der Rotationsfrequenz der Vereinzelungsscheiben betragen, sodass Ablagefrequenzen von über 120 Körnern pro Sekunde möglich werden, die sich zum Vereinzeln von Getreidesamen eignen.

Das Gehäuse umfasst eine, insbesondere um eine Rotationsachse rotationssymmetrische, Mantelinnenfläche, wobei die Fördereinrichtung um die Rotationsachse rotiert, und wobei die Fördereinrichtung mindestens ein Mitnahmeelement aufweist, das derart ausgebildet ist, dass durch die Einlassöffnung übergebene Körner aufgrund der Rotation der Fördereinrichtung zur Mantelinnenfläche hin und/oder entlang der Mantelinnenfläche zur Auslassöffnung befördert werden. Bei der Mantelinnenfläche handelt es sich also um eine rotationssymmetrische Innenfläche eines Außenmantels des Gehäuses. Hier und im Folgenden sind die Begriffe "innen" und "außen", wenn nicht explizit anders erwähnt, in Bezug auf die, innen liegende, Rotationsachse der Fördereinrichtung zu verstehen. Die Mantelinnenfläche des Gehäuses ist rotationssymmetrisch um die Rotationsachse der Fördereinrichtung. Dabei kann die Mantelinnenfläche zylindrisch oder auch komplizierter ausgebildet sein. Insbesondere kann die Mantelinnenfläche derart ausgebildet sein, dass ihr Radius von der oder den Einlassöffnungen zu der Auslassöffnung hin zunimmt, wie es beispielsweise bei einem Doppelkegel aus sich mit den Grundflächen berührenden Kegeln der Fall ist. Durch den zunehmenden Radius erfahren die Körner bei gleichbleibender Rotation der Fördereinrichtung eine zusätzliche Beschleunigung, wenn sie zur Mantelinnenfläche hin und entlang der Mantelinnenfläche zur Auslassöffnung befördert werden. Bei Übergabe der vereinzelten Körner an eine Einlassöffnung des Außenmantels, wie dies beispielsweise bei Vorsehen einer trommelförmigen Vereinzelungseinheit am Außenmantel des Gehäuses der Fall ist, ist das Mitnahmeelement derart ausgebildet, dass die übergebenen Körner lediglich entlang der Mantelinnenfläche zur Auslassöffnung befördert werden.

Das mindestens eine Mitnahmeelement kann je nach Ausbildung der Fördereinrichtung auf vielfältige Weise ausgebildet sein. Beispielsweise können innerhalb der Fördereinrichtung ein oder mehrere Kanäle ausgebildet sein, die von einer Stelle der Fördereinrichtung, die in Überlapp mit der Einlassöffnung gebracht werden kann, zu einer Stelle der Fördereinrichtung, die in Überlapp mit der Auslassöffnung gebracht werden kann, führen. Eine Stelle dieser Kanäle mit geeigneter Krümmung zur Mantelinnenfläche und Auslassöffnung hin kann dabei als Mitnahmeelement fungieren. Beispielsweise können die Kanäle zur Pufferung eines übergebenen Korns zunächst in konstantem radialen Abstand von der Mantelinnenfläche und konstantem axialen Abstand von der Auslassöffnung geführt werden, um dann stichartig zur Mantelinnenfläche und/oder in axialer Richtung zur Auslassöffnung hin gekrümmt zu sein. Hier und im Folgenden bezieht sich der Begriff "axial" auf die Richtung der Rotationsachse der Fördereinrichtung. Alternativ oder zusätzlich kann das Mitnahmeelement als Steg, Aufnahmetasche oder Nut der rotierenden Fördereinrichtung ausgebildet sein. Ebenso kann die Mantelinnenfläche eine Führungskontur für die zu beschleunigenden Körner, beispielsweise in Form einer Spirale, aufweisen, entlang derer die Körner von der rotierenden Fördereinrichtung bzw. deren Mitnahmeelementen geführt werden.

Die Fördereinrichtung kann pro Einlassöffnung ein separates Mitnahmeelement aufweisen oder aber je ein Mitnahmeelement für mehr als eine Einlassöffnung besitzen. Beispielsweise können bei der weiter unten beschriebenen Übergabe der vereinzelten Körner über Einlassöffnungen in der Stirnseite eines trommelförmigen Gehäuses für zwei Einlassöffnungen zwei Kanäle vorgesehen sein, die in dasselbe Mitnahmeelement in Form eines stichartigen Kanals münden. In dieser Ausführung nimmt die Beschleunigungseinheit pro Umlauf stets ein Korn abwechselnd durch die eine und durch die andere Einlassöffnung in der Stirnseite auf und führt es über dasselbe Mitnahmeelement zur Auslassöffnung.

Es sind erfindungsgemäß zwei scheibenförmige Vereinzelungseinheiten vorgesehen, wobei die Fördereinrichtung für jede Vereinzelungseinheit genau ein Mitnahmeelement aufweist, und wobei die den Vereinzelungseinheiten entsprechenden Mitnahmeelemente in Umfangsrichtung der Fördereinrichtung, insbesondere um 180°, zueinander versetzt angeordnet sind. Insbesondere kann das Gehäuse für jede der beiden Vereinzelungsscheiben eine oder mehrere Einlassöffnungen aufweisen, durch die abwechselnd von den beiden Vereinzelungsscheiben Körner übergeben werden, die dann von dem jeweiligen Mitnahmeelemente erfasst und zur Auslassöffnung hin transportiert werden. Da die beiden Mitnahmeelement um 180°, innerhalb von Fertigungstoleranzen, in Umfangsrichtung der Fördereinrichtung versetzt angeordnet sind, kann pro Umdrehung der Fördereinrichtung je ein Korn von jeder der beiden Vereinzelungsscheiben übergeben werden, so dass pro Umdrehung zwei Körner in gleichmäßigen Abständen durch die Auslassöffnung ausgeworfen werden. Durch das versetzte Anordnen der Mitnahmeelemente kann eine besonders hohe Ablagefrequenz erzielt werden, da pro Umdrehung zwei Körner abgelegt werden. Dies ist auch möglich, wenn wie oben beschrieben zwei Einlassöffnungen pro Vereinzelungsscheibe in der jeweiligen Stirnseite eines trommelförmigen Gehäuses vorgesehen sind.

Es können auch mehrere Kanäle je Stirnseite, beispielsweise 2 um 180° versetzt angeordneten, eingebracht werden, so dass 4 um 90° versetzte Auslassöffnungen vorhanden sind und 4 Körner pro Umdrehung abgegeben werden. Dies kann sinnvoll sein, um die Beschleunigerdrehzahl und damit die auf die Körner wirkenden Kräfte zu reduzieren.

Gemäß einer speziellen Weiterbildung können die Vereinzelungseinheiten koaxial zur Rotationsachse der Fördereinrichtung angeordnet sein, wobei das Gehäuse trommelförmig mit einem Innenmantel und einem Außenmantel ausgebildet ist, wobei die Einlassöffnungen axial versetzt an dem Innenmantel angeordnet sind, und wobei die Mitnahmeelemente derart ausgebildet sind, dass sie die übergebenen Körner von den Einlassöffnungen axial nach innen und radial nach außen zur Innenfläche des Außenmantels befördern. Bei koaxialer Anordnung der Vereinzelungsscheiben in Bezug auf die Rotationsachse der Fördereinrichtung kann der Radius der Vereinzelungsscheiben und der zugehörigen Lochreihen derart gewählt werden, dass die abgestreiften bzw. ausgestoßenen Körner aufgrund der Schwerkraft durch die jeweilige Einlassöffnung im Innenmantel des trommelförmigen Gehäuses fallen bzw. durch diese gestoßen werden. Die Einlassöffnungen sind dementsprechend in einem, bzgl. der Schwerkraft, unteren Bereich des Innenmantels angeordnet und aufgrund der Anordnung der beiden Vereinzelungsscheiben auf beiden Stirnseiten der offenen Gehäusetrommel axial versetzt vorgesehen.

Das Gehäuse ist in dieser Weiterbildung in Form einer hohlen Trommel mit ausgedehnter Außenwand ausgebildet, so dass neben den Stirnseiten der Trommel ein Innenmantel und ein Außenmantel zum Gehäuse gehören. Wie bereits oben beschrieben, sind die Mitnahmeelemente dabei derart ausgebildet, dass sie die übergebenen Körner von den Einlassöffnungen axial nach innen, bzgl. einer axialen Ausdehnung des Gehäuses, und radial nach außen, bzgl. der Rotationsachse der Fördereinrichtung, zur Innenfläche des Außenmantels befördern. Die Fördereinrichtung kann dabei die oben beschriebenen Kanäle aufweisen, die insbesondere in Hinblick auf ihr jeweiliges Mitnahmeelement um 180° in Umfangsrichtung der Fördereinrichtung versetzt ausgebildet sein können.

Es sei darauf hingewiesen, dass nicht zwangsläufig, Kanäle axial nach innen führen müssen, zum Beispiel kann auch einer der Kanäle lediglich radial nach außen führen und der andere den kompletten axialen Weg zurücklegen.

Gemäß einer alternativen speziellen Weiterbildung können die Vereinzelungsscheiben versetzt zur Rotationsachse der Fördereinrichtung angeordnet sein, wobei das Gehäuse trommelförmig mit einem Außenmantel ausgebildet ist und für jede Lochreihe eine Einlassöffnung besitzt, die an der jeweiligen Stirnseite des Gehäuses angeordnet ist, und wobei die Mitnahmeelemente derart ausgebildet sind, dass sie die übergebenen Körner von den Einlassöffnungen axial nach innen und radial nach außen zur Innenfläche des Außenmantels befördern. Wie bereits oben beschrieben, übergeben in dieser Weiterbildung die teilweise mit der Beschleunigungseinheit überlappenden Vereinzelungsscheiben die Körner durch Einlassöffnungen in der Stirnseite des trommelförmigen Gehäuses an die Fördereinrichtung. Dabei kann das trommelförmige Gehäuse als geschlossene Trommel mit Stirnseiten und Außenmantel oder als die oben beschriebene Hohltrommel mit teilweise offenen Stirnseiten, Innenmantel und Außenmantel ausgebildet sein.

Die Fördereinrichtung kann pro Einlassöffnung einen Kanal aufweisen, wobei die Kanäle von den Einlassöffnungen einer Stirnseite in dasselbe Mitnahmeelement münden können. Auch hier können die den beiden Vereinzelungsscheiben entsprechenden Mitnahmeelemente um 180° in Umfangsrichtung der Fördereinrichtung versetzt angeordnet sein, sodass pro Umdrehung der Fördereinrichtung zwei Körner an die Ablageeinheit übergeben werden. Die Mitnahmeelemente sind auch in dieser Ausführung derart ausgebildet, dass sie die an den Stirnseiten der Gehäusetrommel übergebenen Körner axial nach innen, bzgl. einer axialen Ausdehnung des Gehäuses, und radial nach außen, bzgl. der Rotationsachse der Fördereinrichtung, zur Innenfläche des Außenmantels befördern.

Die Übergabe der vereinzelten Körner von Vereinzelungsscheiben kann also, je nach relativer Positionierung der Vereinzelungsscheiben und der Beschleunigungseinheit, über einen Innenmantel oder die Stirnseiten des Gehäuses der Beschleunigungseinheit erfolgen.

Es können auch mehrere Kanäle je Stirnseite, beispielsweise 2 um 180° versetzt angeordneten, eingebracht werden, so dass 4 um 90° versetzte Auslassöffnungen vorhanden sind und 4 Körner pro Umdrehung abgegeben werden. Dies kann sinnvoll sein, um die Beschleunigerdrehzahl und damit die auf die Körner wirkenden Kräfte zu reduzieren.

Es können sich auch jeder Seite eine gemeinsame große Lochöffnung mit nur einem sich dahinter befindlichen großen Führungskanal befinden.

Die Fördereinrichtung kann dabei pro Einlassöffnung ein Mitnahmeelement aufweisen oder aber ein Mitnahmeelement für mehr als eine Einlassöffnung besitzen. Die Mitnahmeelemente können dabei in Umfangsrichtung der Fördereinrichtung versetzt angeordnet werden. Bei **M** Mitnahmeelementen kann der Versatz vorzugsweise 360°/**M** betragen, sodass pro Umdrehung der Fördereinrichtung **M** Körner an die Ablageeinheit übergeben werden können. Durch geeignete Ausbildung der Mitnahmeelemente und Kanäle der Fördereinrichtung lassen sich trommelförmige Vereinzelungseinheiten mit vier oder mehr Lochreihen mit einer Beschleunigungseinheit verknüpfen.

In allen beschriebenen Fällen führt die hohe Rotationsfrequenz der Fördereinrichtung zu einer Beschleunigung der vereinzelten Körner und einer Vergrößerung ihres Abstands entlang eines Förderwegs zur Ablageeinheit, sodass Körner mit hoher Längsverteilungsqualität und hoher Ablagefrequenz einzeln und gezielt abgelegt werden können. Dabei wird durch Vorsehen mehrerer Lochreihen pro Vereinzelungseinheit und Vorsehen mehrerer solcher Vereinzelungseinheiten ein Vielfaches der Ablagefrequenz herkömmlicher Verteilaggregate erreicht.

Die oben genannten Aufgaben werden auch durch ein Verfahren zur Vereinzelung und gezielten Ablage von körnigem Gut, insbesondere von Samenkörnern und/oder Dünger, gelöst, welches die folgenden Schritte umfasst: Erzeugen einer Abfolge von einzelnen Körnern aus einem Gutstrom mittels mindestens einer Vereinzelungseinheit; und dosiertes Ablegen einzelner Körner mittels einer Ablageeinheit, insbesondere eines Säschars; wobei die mittels der Vereinzelungseinheit vereinzelten Körner vor dem Ablegen durch Rotation in einer Beschleunigungseinheit zur Saatgutablageseite hin beschleunigt werden.

Hierbei können dieselben Variationen und Weiterbildungen, die oben im Zusammenhang mit der erfindungsgemäßen Einzelkornsävorrichtung beschrieben wurden, auch auf das Verfahren zur Vereinzelung und gezielten Ablage von körnigem Gut angewendet werden. Insbesondere können die oben beschriebenen Weiterbildungen der Vereinzelungseinheit und der Beschleunigungseinheit zum Einsatz kommen.

Erfindungsgemäß erzeugt die Vereinzelungseinheit eine Abfolge von einzelnen Körnern aus einem Gutstrom. Der Gutstrom kann dabei der Vereinzelungseinheit, wie oben beschrieben, von einem Vorratsbehälter für das körnige Gut zugeführt werden. Zum dosierten Ablegen können die vereinzelten und beschleunigten Körner über Schlauchleitungen zu den Säscharen geführt werden. Dies kann aufgrund der Fliehkraft tangential zur Rotation der vereinzelten Körner in der Beschleunigungseinheit erfolgen. Wie oben mehrfach beschrieben, werden die vereinzelten Körner in der Beschleunigungseinheit von geeignet ausgebildeten Elementen entlang eines Segments einer Kreisbahn geführt, sodass sie durch die Rotation dieser Elemente entsprechend beschleunigt werden. An einer geeigneten Stelle der Beschleunigungseinheit werden die beschleunigten Körner dann tangential ausgeworfen und so an die Ablageeinheit übergeben. Von der Vereinzelungseinheit können die vereinzelten Körner mit den oben beschriebenen Auswerferelementen an die Beschleunigungseinheit übergeben werden. Die Auswerferelemente können den Körnern dazu gezielt einen Impuls übertragen, der sie von der Vereinzelungseinheit zur Beschleunigungseinheit bewegt. Aufgrund der Vereinzelung erfolgt das Ablegen der Körner dosiert (siehe unten) und aufgrund der Beschleunigung mit einer gewünschten Ablagegeschwindigkeit.

Gemäß einer Weiterbildung kann die Vereinzelungseinheit mindestens zwei Lochreihen zum Erzeugen der Abfolge von einzelnen Körnern aufweisen, wobei die Körner von der Vereinzelungseinheit aufgrund einer Druckdifferenz an den Lochreihen aus dem Gutstrom aufgenommen werden. Wie oben beschrieben kann die Vereinzelungseinheit dabei scheibenförmig oder trommelförmig ausgebildet sein. Entsprechend ergeben sich die oben beschriebenen Optionen für eine Ausbildung der Beschleunigungseinheit. Die mindestens zwei Lochreihen umfassen wie oben beschrieben eine Vielzahl von gleichmäßig umfangsverteilten Löchern, die parallel oder versetzt zueinander angeordnet sein können. Mittels einer Pumpeinrichtung kann gezielt eine Druckdifferenz zwischen der einen Seite der Lochreihen und ihrer gegenüberliegenden Seite erzeugt werden. Dazu ist zumindest die eine Seite der Lochreihen derart eingehaust, dass ein Über- oder Unterdruck in der Einhausung erzeugt werden kann. Durch die Druckdifferenz werden die Körner an der Seite des höheren Drucks von den Löchern der Lochreihen angesaugt, sodass sie einzeln durch Rotation der Vereinzelungseinheit zu einer Übergabestelle transportiert werden können, an der sie gezielt an die Beschleunigungseinheit übergeben werden. Geeignet angeordnete Abstreifelemente können dabei überschüssige Körner abstreifen, sodass stets nur ein Korn pro Loch transportiert wird.

Die Körner können an der Übergabestelle wie oben beschrieben abgestreift, ausgestoßen oder von dem Druckgefälle getrennt werden. Dazu können die oben beschriebenen Abstreifelemente und/oder Auswerferelemente gesteuert bewegt werden bzw. die dem Korn abgewandte Seite des jeweiligen Loches vor ein feststehendes Element gefahren werden. Die Bewegung der Abstreifelemente und/oder Auswerferelemente kann dabei derart gesteuert werden, dass die vereinzelten Körner impulsartig von der Vereinzelungseinheit an die Beschleunigungseinheit übergeben werden.

Die Körner werden erfindungsgemäß alternierend von einer ersten Vereinzelungseinheit und einer zweiten Vereinzelungseinheit an die Beschleunigungseinheit übergeben. Zusätzlich können die Körner alternierend von der ersten und der zweiten der beiden Lochreihen einer jeden Vereinzelungseinheit an die Beschleunigungseinheit übergeben werden. Die Rotation der Vereinzelungseinheiten und die Bewegung der Abstreif- bzw. Auswerferelemente kann hierzu von einer Steuer- und/oder Regeleinheit und/oder einer Steuerkurve, beispielsweise mit geeigneter Nockengeometrie, entsprechend gesteuert und/oder geregelt werden. Wie oben beschrieben können insbesondere zwei Vereinzelungsscheiben mit zwei oder mehr Lochreihen vorgesehen werden, die entweder koaxial mit der unten erwähnten rotierenden Fördereinrichtung oder versetzt, aber mit dieser überlappend angeordnet sein können. Entsprechend kann die Übergabe durch Einlassöffnungen in einem Innenmantel oder in den Stirnseiten eines Gehäuses der Beschleunigungseinheit erfolgen. Durch alternierende Übergabe der Körner von der ersten und der zweiten Vereinzelungseinheit lässt sich die Ablagefrequenz der Körner gegenüber herkömmlichen Vereinzelungseinheiten vervielfachen, sodass auch Getreidesamen mit Einzelkorndosierung abgelegt werden können.

Gemäß einer Weiterbildung können die Körner in der Beschleunigungseinheit durch Rotation einer Fördereinrichtung beschleunigt werden, wobei pro Umdrehung der Fördereinrichtung je ein einzelnes Korn von jeder Vereinzelungseinheit aufgenommen wird. Dabei können die oben beschriebenen Weiterbildungen der Fördereinrichtung, des Gehäuses der Beschleunigungseinheit und der Mitnahmeelemente der Fördereinrichtung zum Einsatz kommen. Wie beschrieben, kann die Fördereinrichtung derart ausgebildet sein, dass durch Einlassöffnungen von den Vereinzelungseinheiten aufgenommene Körner durch geeignet geformte Mitnahmeelemente bzgl. einer axialen Ausdehnung der Beschleunigungseinheit nach innen und bzgl. einer Rotationsachse der Fördereinrichtung radial nach außen zu einer Auslassöffnung in einem Gehäuse der Beschleunigungseinheit befördert und dabei durch die Rotation der Fördereinrichtung beschleunigt werden.

Gemäß dieser Weiterbildung wird pro Umdrehung der Fördereinrichtung je ein einzelnes Korn von jeder Vereinzelungseinheit aufgenommen. Somit werden bei Vorsehen zweier Vereinzelungseinheiten zwei Körner pro Umdrehung der Fördereinrichtung an die Ablageeinheit übergeben. Bei Vorsehen zweier Vereinzelungseinheiten mit je zwei Lochreihen ä **N** Löcher werden pro Umdrehung der Vereinzelungseinheiten also **4N** Körner an die Ablageeinheit übergeben. Wenn pro Umdrehung der Fördereinrichtung je zwei Körner abgeben werden, muss die Rotationsfrequenz der Fördereinrichtung somit das **2N**-fache der Rotationsfrequenz der Vereinzelungseinheiten betragen. Die Fördereinrichtung wird hierzu mittels einer Steuer- und/oder Regeleinheit, beispielsweise elektromotorisch, gesteuert angetrieben. Die Rotationsfrequenz der Fördereinrichtung kann dabei in Abhängigkeit von einer Fahrgeschwindigkeit der Zugmaschine der Sämaschine, einer gewünschten Ablagefrequenz der Samenkörner bzw. einer gewünschten Auswurfgeschwindigkeit geregelt werden. Alternativ ist denkbar, dass pro Umdrehung der Fördereinrichtung nur ein Korn aufgenommen wird, in diesem Fall alternierend von jeder der beiden Vereinzelungseinheiten, und somit auch nur ein Korn abgelegt wird. In diesem Fall ergibt sich eine zusätzliche Beschleunigung der vereinzelten Körner vor der Übergabe an die Ablageeinheit.

Gemäß einer weiteren Weiterbildung können alternierend Körner von zwei Vereinzelungseinheiten mit je zwei Lochreihen an die Beschleunigungseinheit derart übergeben werden, dass mindestens 120 Körner pro Sekunde abgelegt werden. Wie erwähnt können die Vereinzelungseinheiten hierzu als Vereinzelungsscheiben mit zwei Lochreihen ausgebildet sein. Eine Steuer- und/oder Regeleinheit kann den Antrieb der rotierenden Vereinzelungsscheiben und der rotierenden Fördereinrichtung derart steuern und/oder regeln, dass mindestens 120 Körner pro Sekunde abgelegt werden. Dadurch lassen sich auch Getreidesamen mit Einzelkorndosierung gezielt ablegen. Die Übergabe der vereinzelten Körner an die Beschleunigungseinheit kann automatisch mittels Steuerkurven mit geeigneter Nockengeometrie oder aber von der Steuer- und/oder Regeleinheit gesteuert erfolgen. Wie beschrieben lässt sich die Ablagefrequenz durch Vorsehen mehrerer Vereinzelungseinheiten mit je zwei oder mehr Lochreihen gegenüber herkömmlichen Vereinzelungseinheiten vervielfachen. Es versteht sich, dass auch mehr als zwei Vereinzelungseinheiten und/oder mehr als zwei Lochreihen vorgesehen werden können. Auch kann eine trommelförmige Vereinzelungseinheit mit vier oder mehr Lochreihen zum Einsatz kommen, wobei die oben beschriebenen Weiterbildungen der Beschleunigungseinheit verwendet werden können.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
- Fig. 1: zeigt eine schematische Darstellung einer nicht erfindungsgemäßen Einzelkornsävorrichtung im Querschnitt.
- Fig. 2: zeigt schematisch eine nicht erfindungsgemäße spezielle Ausführung mit außenbefüllter, trommelförmiger Vereinzelungseinheit und außen angeordneter Beschleunigungseinheit.
- Fig. 3: zeigt schematisch eine weitere nicht erfindungsgemäße spezielle Ausführung mit innenbefüllter, trommelförmiger Vereinzelungseinheit und innen angeordneter Beschleunigungseinheit.
- Fig. 4: zeigt eine exemplarische Ausführung einer Beschleunigungseinheit mit koaxialer Vereinzelungsscheibe gemäß der vorliegenden Erfindung in einer perspektivischen Gesamtansicht.
- Fig. 5A - C: zeigen Teilansichten der Beschleunigungseinheit aus Fig. 4.

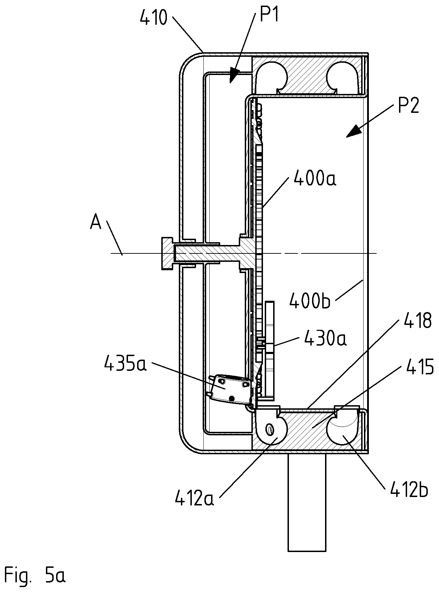

- Fig. 5A: zeigt einen Querschnitt durch die Beschleunigungseinheit entlang der Linie B-B.

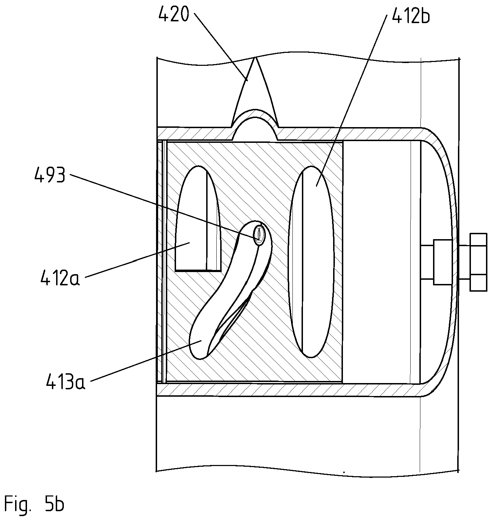

- Fig. 5B: zeigt einen Querschnitt durch die Beschleunigungseinheit entlang der Linie C-C.

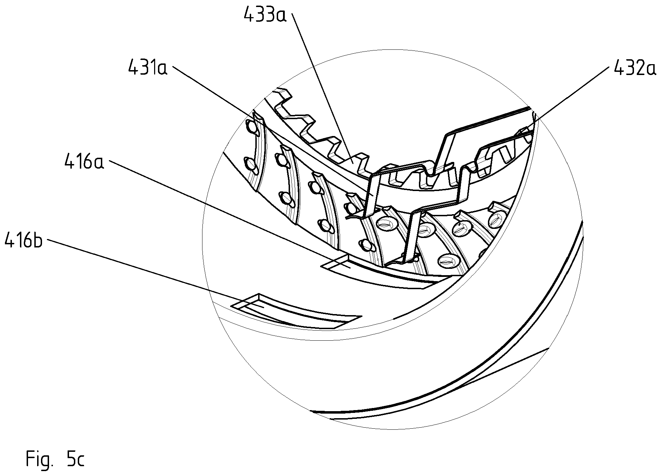

- Fig. 5C: zeigt eine Detailansicht im Bereich der Einlassöffnungen der Beschleunigungseinheit.

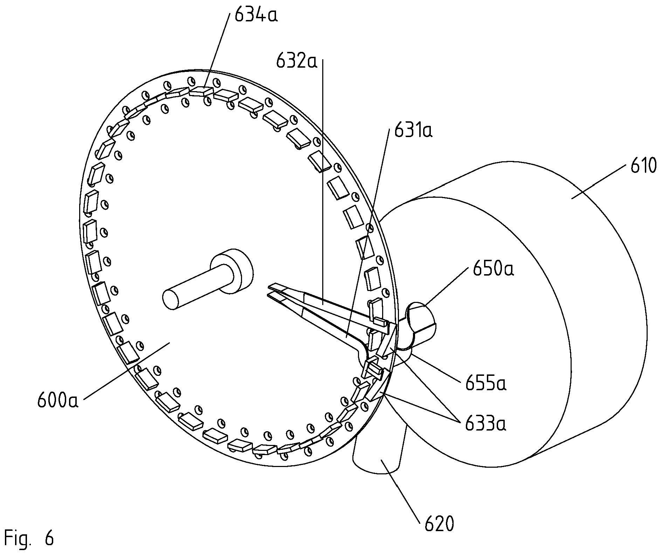

- Fig. 6: zeigt eine alternative exemplarische Ausführung einer Beschleunigungseinheit mit versetzt angeordneten Vereinzelungsscheiben gemäß der vorliegenden Erfindung in einer perspektivischen Gesamtansicht.

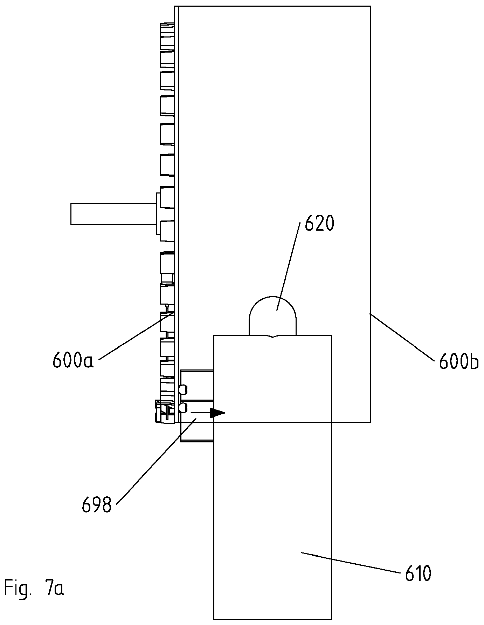

- Fig. 7A - C: zeigen Teilansichten der Beschleunigungseinheit aus Fig. 6.
- Fig. 7A: zeigt eine Draufsicht der Beschleunigungseinheit mit versetzt angeordneter Vereinzelungsscheibe aus Fig. 6.

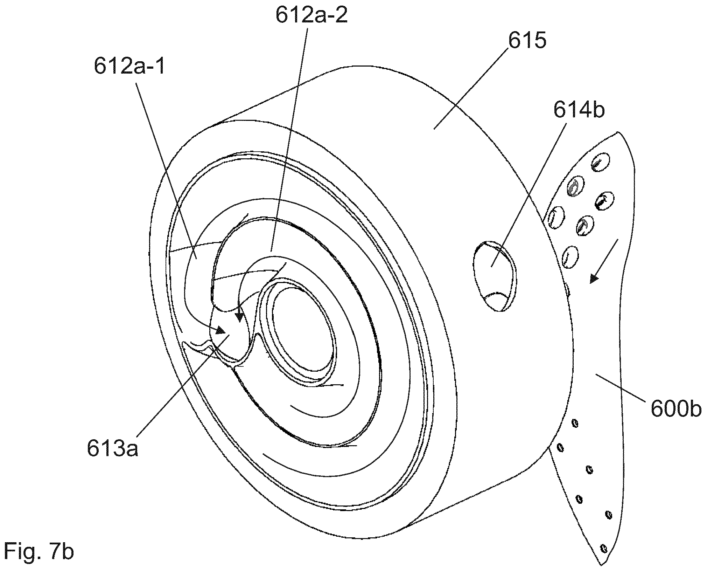

- Fig. 7B: zeigt eine exemplarische Ausführung einer Fördereinrichtung der Beschleunigungseinheit mit zwei Kanälen und einem Mitnahmeelement pro Vereinzelungsscheibe.

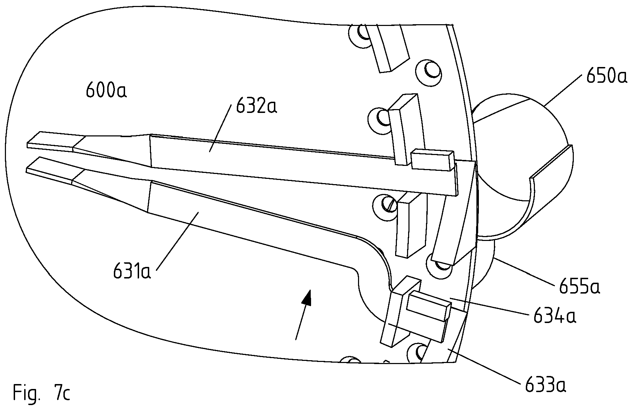

- Fig. 7C: zeigt eine Detailansicht der Auswerferelemente einer Vereinzelungsscheibe.

Im Folgenden sind gleiche oder gleichartige Elemente mit gleichen Bezugszeichen bezeichnet. Auf eine wiederholte Beschreibung dieser Elemente wird aus Gründen der Klarheit verzichtet. Zudem versteht sich, dass in den folgenden Ausführungsformen einige oder alle Elemente durch gleichartige, im Zusammenhang mit anderen Ausführungsformen beschriebene Elemente ersetzt oder kombiniert werden können.

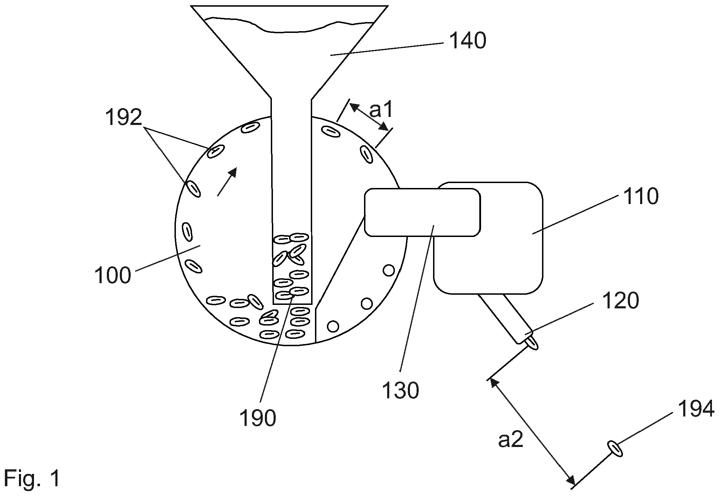

Fig. 1 zeigt eine schematische Darstellung einer nicht erfindungsgemäßen Einzelkornsävorrichtung zur gezielten Ablage von körnigem Gut im Querschnitt. Zwischen der in dieser schematischen Darstellung nur mit einem Schussrohr 120 angedeuteten Ablageeinheit und der Vereinzelungseinheit 100 ist erfindungsgemäß eine, hier schematisch dargestellte, Beschleunigungseinheit 110 angeordnet. Aus einem Vorratsbehälter 140 für das körnige Gut wird der hier als Vereinzelungsscheibe dargestellten Vereinzelungseinheit 100 ein Strom von Körnern 190 zugeführt, die einzeln durch einen Saugdruck an den Löchern einer Lochreihe der Vereinzelungseinheit 100 gebunden werden. Die Löcher sind dabei gleichmäßig mit einem Abstand **a₁** entlang des Umfangs der Vereinzelungsscheibe 100 angeordnet, sodass die vereinzelten Körner 192 mit einem konstantem Abstand **a₁** transportiert werden, bevor sie mittels einer Übergabeeinheit 130 an die Beschleunigungseinheit 110 übergeben werden.

In der Beschleunigungseinheit 110 werden die vereinzelten Körner beschleunigt und anschließend an das Schussrohr 120 übergeben. Aufgrund der Beschleunigung werden die Körner 194 räumlich auseinander gezogen, sodass der Abstand **a₂** zweier aufeinanderfolgender Körner 194 bei der Ablage deutlich größer als der Abstand **a₁** der Körner in der Vereinzelungseinheit ist. Dadurch können die abgegebenen Körner mehrerer Vereinzelungsscheiben und/oder Lochreihen mit hoher Vereinzelungsqualität und mit derselben Geschwindigkeit abgelegt werden. Die Variationskoeffizienten in der Längsverteilung der ausgebrachten Saat werden dadurch minimiert.

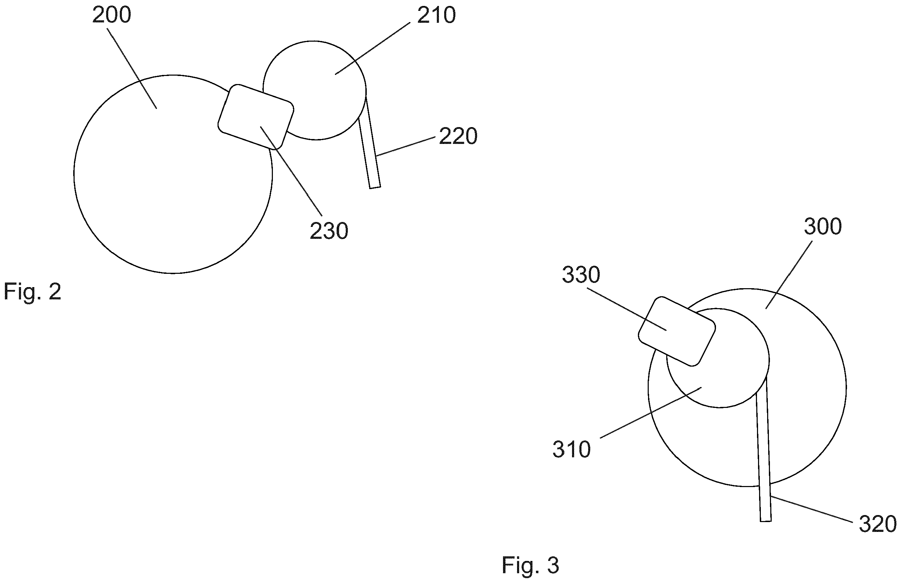

Fig. 2 zeigt schematisch eine nicht erfindungsgemäße Vereinzelungsvorrichtung mit außenbefüllter, trommelförmiger Vereinzelungseinheit und außen angeordneter Beschleunigungseinheit. Anstelle der Vereinzelungsscheibe ist hier eine Vereinzelungstrommel 200 vorgesehen, entlang deren Umfangs eine oder mehrere Lochreihen angeordnet sind. Von dieser werden die vereinzelten Körner mittels einer schematisch dargestellten Übergabeeinheit 230 an die Beschleunigungseinheit 210 übergeben, wo sie beschleunigt und schließlich durch das Schussrohr 220 an die Ablageeinheit weitergegeben werden. Da die Beschleunigungseinheit 210 außen an der Peripherie der Vereinzelungstrommel 200 angeordnet ist, werden die Körner an einem Außenmantel der Vereinzelungstrommel transportiert. Auch hier können die einzelnen Körner durch einen Saugdruck an die Löcher der Lochreihen gebunden werden.

In Fig. 3 ist schematisch eine alternative nicht erfindungsgemäße Vereinzelungsvorrichtung gezeigt, bei der die Beschleunigungseinheit 310 innerhalb der Vereinzelungstrommel 300 angeordnet ist. Hier werden die vereinzelten Körner von einem Innenmantel der Vereinzelungstrommel 300 mittels der Übergabeeinheit 330 an die Beschleunigungseinheit 310 übergeben, wo sie beschleunigt und schließlich durch das Schussrohr 320 ausgeworfen werden.

In beiden Ausführungen können die Ausdehnungen der Vereinzelungstrommel und der Beschleunigungseinheit entlang ihrer jeweiligen Rotationsachse so gewählt werden, dass die vereinzelten Körner von einer oder mehreren Lochreihen der Vereinzelungstrommel durch eine oder mehrere Einlassöffnungen der Beschleunigungseinheit an letztere übergeben werden können. Je nach Ausbildung der zuvor beschriebenen Fördereinrichtungen der Beschleunigungseinheit können bei einer Vereinzelungstrommel auch mehr als vier Lochreihen vorgesehen sein, sodass sich besonders hohe Ablagefrequenzen realisieren lassen.

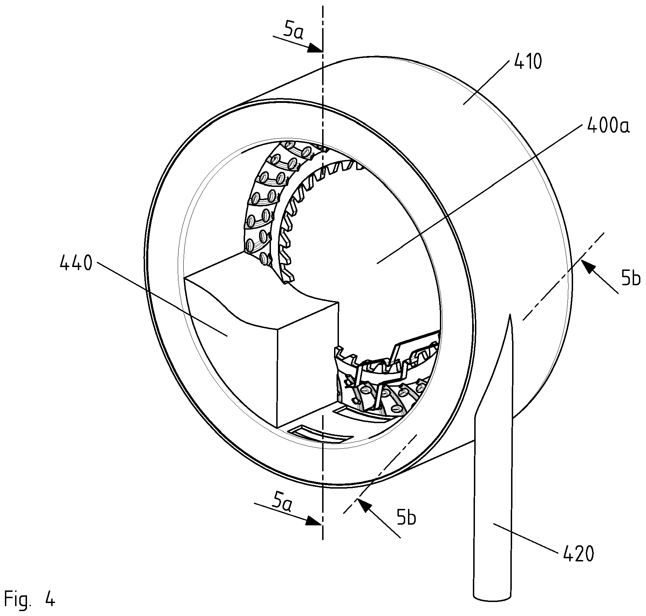

Fig. 4 zeigt eine exemplarische Ausführung einer Beschleunigungseinheit mit koaxialer Vereinzelungsscheibe gemäß der vorliegenden Erfindung in einer perspektivischen Gesamtansicht. In der hier dargestellten Ausführung umfasst die Beschleunigungseinheit 410 ein trommelförmiges Gehäuse mit ausgedehntem Zylindermantel. Der Zylindermantel besitzt somit einen Außenmantel, der hier der Einfachheit halber rotationssymmetrisch gezeigt ist, und einen Innenmantel, in dem hier zwei Einlassöffnungen eingelassen sind. Durch vordere und rückwärtige Stirnseiten wird das Gehäuse zudem im Wesentlichen abgeschlossen, sodass durch die Einlassöffnungen eingebrachte Körner das Gehäuse nur durch das Schussrohr 420 wieder verlassen können. Innerhalb des Gehäuses rotiert, hier nicht sichtbar, eine Fördereinrichtung, die derart ausgebildet ist, dass durch die Einlassöffnungen übergebene Körner aufgrund der Rotation beschleunigt und schließlich tangential durch das Schussrohr 420 ausgeschossen werden. In der hier dargestellten Ausführung rotieren sowohl die Fördereinrichtung der Beschleunigungseinheit als auch die Vereinzelungsscheibe 400a im Uhrzeigersinn. Dabei sind die Fördereinrichtung und die Vereinzelungsscheiben in dieser speziellen Weiterbildung koaxial zueinander angeordnet. Für die nicht gezeigte vordere Vereinzelungsscheibe 400b kann daher derselbe Antrieb verwendet werden wie für die dargestellte hintere Vereinzelungsscheibe 400a.

Jede Vereinzelungsscheibe besitzt auf je zwei verschiedenen Radien zwei gleichmäßig umfangsverteilte Lochreihen. Von den Löchern dieser Lochreihen werden durch Saugdruck einzelne Körner aus einem innerhalb des Gehäuses angeordneten Vorratsbehälter 440 für das Saatgut aufgenommen und dann im Uhrzeigersinn weiter transportiert. Schließlich gelangen die vereinzelten Körner in den Bereich der Einlassöffnungen, wo sie durch Abstreifelemente gezielt an die Beschleunigungseinheit übergeben werden. Die nun frei gewordenen Löcher werden bei der darauffolgenden Vorbeifahrt an dem Vorratsbehälter 440 wieder mit Körnern belegt. Die Fig. zeigt die Beschleunigungseinheit 410 in einer vertikalen Anordnung, bei der das Schussrohr 420 zum Ackerboden hin zeigt. Einlassöffnungen und Auslassöffnung sind zum Erzielen einer ausreichenden Pufferkapazität und Beschleunigung entlang des Umfangs der Beschleunigungseinheit 410 hinreichend, beispielsweise um mindestens 270°, in Rotationsrichtung voneinander getrennt.

Fig. 5A zeigt einen Querschnitt durch die Beschleunigungseinheit entlang der Linie B-B in Fig. 4. Neben der Rotationsachse A sind die erste Vereinzelungsscheibe 400a und die zweite Vereinzelungsscheibe 400b schematisch dargestellt. Die Fördereinrichtung 415 rotiert innerhalb des Gehäuses der Beschleunigungseinheit 410, von dem hier der Innenmantel 418 explizit bezeichnet ist. Obwohl die Vereinzelungsscheiben 400a und 400b koaxial zur Antriebsachse der Fördereinrichtung 415 angeordnet sind, werden die Vereinzelungsscheiben unabhängig von der Fördereinrichtung angetrieben. Dadurch lässt sich die Fördereinrichtung mit einer deutlich höheren Rotationsfrequenz im Vergleich zu den Vereinzelungsscheiben antreiben, wodurch die abzulegenden Körner eine starke Beschleunigung erfahren. Die Vereinzelungsscheiben können gemeinsam oder getrennt über entsprechende, insbesondere regelbare, Elektromotoren (nicht dargestellt) angetrieben werden. Ebenso kann die Fördereinrichtung regelbar über einen Elektromotor (nicht dargestellt), beispielsweise einen Servomotor, angetrieben werden. Die Antriebe können insbesondere über eine gemeinsame Regeleinheit geregelt werden, um die gewünschte Ablagefrequenz, insbesondere in Abhängigkeit von der Fahrgeschwindigkeit der Zugmaschine der Sämaschine, zu garantieren. Der Antrieb kann auch einstellbare Getriebe und/oder Hydraulikmotoren aufweisen.

Durch ein äußeres und inneres Gehäuse der Beschleunigungseinheit lassen sich Raumbereiche mit verschiedenen Drücken **p₁** und **p₂** definieren, wie sie in Fig. 5A dargestellt sind. Beispielsweise kann mittels geeigneter Pumpeinrichtungen in dem mit **p₂** bezeichneten Innenraum ein Überdruck und/oder in dem mit **p₁** bezeichneten Außenraum ein Unterdruck erzeugt werden, sodass einzelne Körner an der dem Innenraum zugewandten Seite der Vereinzelungsscheiben 400a bzw. 400b durch den Saugdruck **p₂ - p₁** in die Bohrungen der Lochreihen gedrückt werden. In dem hier gezeigten Querschnitt wurde der dem dargestellten linken Teil der Vereinzelungsscheibe 400a entsprechende rechte Teil der Vereinzelungsscheibe 400b weggelassen. Dieselben Kammern und Drücke treten jedoch auch in dem rechten Teil auf.

In dem Querschnitt 5A sind weiterhin Abstreifelemente 430a und eine Auswerferrolle 435a für die linke Vereinzelungsscheibe 400a dargestellt, von denen die Abstreifelemente 431a und 432a in Fig. 5C im Detail dargestellt sind.

Die vorgespannten Abstreifelemente 431a und 432a werden über eine der jeweiligen Vereinzelungsscheibe zugeordnete Steuerkurve 433a mit geeigneter Nockengeometrie derart gesteuert, dass sie die vereinzelten Körner der beiden Lochreihen alternierend in die der Vereinzelungsscheibe zugeordnete Einlassöffnung stoßen. Dazu werden die von der Vereinzelungsscheibe beförderten Körner impulsartig von den Abstreifelementen 431a und 432a radial nach außen, d. h. in Richtung der Einlassöffnung 416a gestoßen. Es versteht sich, dass äquivalente Abstreifelemente auch für die nicht dargestellte zweite Vereinzelungsscheibe 400b vorgesehen sind, die die vereinzelten Körner der beiden Lochreihen der zweiten Vereinzelungsscheibe alternierend in die zweite Einlassöffnung 416b stoßen. Für jede Vereinzelungsscheibe kann weiterhin, wie in Fig. 5A gezeigt, eine rückseitige Auswerferrolle 435a vorgesehen sein, die verklemmte Körner oder Kornbruchstücke aus den Bohrungen der Lochreihen drückt.

Die den beiden Vereinzelungsscheiben zugeordneten Einlassöffnungen 416a und 416b sind an einer, vorzugsweise bzgl. der Schwerkraft unteren Stelle, des Innenmantels 418 des Gehäuses der Beschleunigungseinheit axial, bzgl. einer Rotationsachse A der Fördereinrichtung 415, versetzt angeordnet. Von den in Fig. 5A angedeuteten Abstreifelementen 430a werden die Körner somit einzeln und impulsartig in die Einlassöffnungen 416a bzw. 416b gestoßen, von wo aus sie in entlang des Umfangs der Fördereinrichtung umlaufende Kanäle 412a und 412b gelangen, von denen in Fig. 5B ein Querschnitt dargestellt ist. Die Kanäle 412a und 412b erstrecken sich dabei nicht entlang des gesamten Umfangs der Fördereinrichtung, sondern lediglich entlang eines Teilsegments, beispielsweise über 270°. An ihrem jeweiligen Ende befindet sich ein axial nach innen, bzgl. einer axialen Ausdehnung der Fördereinrichtung, und radial nach außen, bzgl. der Rotationsachse A der Fördereinrichtung, führender Stichkanal, der in Fig. 5B als Stichkanal 413a für den linken Kanal 412a dargestellt ist. Zusammen mit dem jeweiligen Stichkanal bilden die beiden Kanäle somit zwei Mitnahmeelemente, die die durch die Einlassöffnungen 416a und 416b übergebenen Körner mitnehmen und beschleunigen und schließlich axial nach innen und radial nach außen in den Bereich der Auslassöffnung führen, die in Fig. 5B durch das sich tangential anschließende Schussrohr 420 angedeutet ist.

Aufgrund der Rotation der Fördereinrichtung 415 und somit der Kanäle 412a und 412b bzw. 413a wird ein durch eine der Einlassöffnungen übergebenes Korn 493 beschleunigt von der Einlassöffnung zur Auslassöffnung befördert und dort tangential mit hoher Geschwindigkeit ausgeworfen. Dabei wird ein durch die Einlassöffnung gestoßenes Korn zunächst nicht von dem schnell rotierenden, parallel zur Stirnwand des Gehäuses verlaufenden Teil 412a bzw. 412b des Kanals mitgenommen. Erst wenn das axial zur Mitte des Gehäuses und radial nach außen führende Kanalende 413a als Mitnahmeelement auf das Korn trifft, wird dieses mitgenommen und in der radialen Kanalöffnung aufgrund von Zentrifugalkräften an die rotationssymmetrische Innenfläche des Außenmantels des Gehäuses gedrückt. Nachdem das Korn in dieser Kanalöffnung einen Teil des Umfangs des Gehäuses, beispielsweise mindestens 270°, zurückgelegt hat, überstreicht die Kanalöffnung an der Anschlussstelle des Schussrohres 420 eine Auslassöffnung des Gehäuses, durch die das mitgeführte Korn somit tangential ausgeworfen wird. Die Geschwindigkeit, mit der das Korn ausgeworfen wird, entspricht dabei seiner Umfangsgeschwindigkeit, die aufgrund der hohen Rotationsfrequenz der Fördereinrichtung 415 erheblich höher ist als die Umfangsgeschwindigkeit der von den Vereinzelungsscheiben transportierten Körner. Die einzelnen Körner können somit mit hoher Vereinzelungsqualität und hoher Präzision, im Hinblick auf die Position und die Geschwindigkeit der Ablage, dem Säschar zugeführt werden.

Da die Mitnahmekanäle 413a auf kurzem Weg, d. h. mit einem Winkel von mindestens 30° zur jeweiligen Stirnwand, zur axialen Mitte des Gehäuses führen, steht nahezu die gesamte Strecke zwischen Einlassöffnung und Schussrohr als Puffer zur Verfügung, um das jeweilige Korn zum richtigen Zeitpunkt zu übergeben. Somit können leichte zeitliche Schwankungen in der Betätigung der Abstreifelemente 431a und 432a durch den Puffer ausgeglichen werden, sodass die Körner immer exakt an derselben Position mit konstanter Frequenz in das Schussrohr abgegeben werden. Die Frequenz ist dabei lediglich durch die Umlauffrequenz der Mitnahmekanäle 413a bestimmt. Als Resultat erhält man eine besonders hohe Längsverteilungsqualität.

Um alternierend Körner von den beiden Vereinzelungsscheiben aufnehmen zu können, sind die beiden Kanäle 412a und 412b und ihre Kanalenden 413a entlang des Umfangs der Fördereinrichtung 415 um 180° versetzt angeordnet. Die Abstreifelemente 430a der beiden Vereinzelungsscheiben werden dabei derart von der Nockengeometrie gesteuert, dass bei jeder halben Umdrehung der Fördereinrichtung abwechselnd ein Korn von der ersten Vereinzelungsscheibe 400a und von der zweiten Vereinzelungsscheibe 400b durch die jeweilige Einlassöffnung übergeben wird. Zusätzlich sorgen die beiden Abstreifelemente 431a und 432a dafür, dass alternierend je ein Korn von der ersten Lochreihe und von der zweiten Lochreihe jeder Vereinzelungsscheibe durch die jeweilige Einlassöffnung übergeben wird. Bei einem vollständigen Umlauf der beiden Vereinzelungsscheiben werden somit **4N** Körner an die Beschleunigungseinheit übergeben, wenn jede der insgesamt vier Lochreihen jeweils **N** Körner aufnehmen kann.

Dabei gibt die Beschleunigungseinheit aufgrund der versetzten Anordnung der beiden Kanäle 412a und 412b pro Umdrehung zwei Körner ab, d. h. dass jede Lochreihe der beiden Vereinzelungsscheiben bei jeder zweiten Umdrehung der Fördereinrichtung bedient wird. Die Rotationsfrequenz der Fördereinrichtung beträgt in dieser Ausführungsform also das **2N**-fache der Rotationsfrequenzen der beiden Vereinzelungsscheiben. Falls die Ablagefrequenz einer Vereinzelungsscheibe mit nur einer Lochreihe auf 30 Körner pro Sekunde begrenzt ist, lässt sich mit der in Fig. 4 dargestellten Ausführung somit einer Vervierfachung der Ablagefrequenz auf dann 120 Körner pro Sekunde erzielen, die sich auch zur Einzelkorndosierungen von Getreidesamen eignet.

Eine alternative Ausführung einer Beschleunigungseinheit mit versetzt angeordneten Vereinzelungsscheiben gemäß der vorliegenden Erfindung ist in Fig. 6 in einer perspektivischen Gesamtansicht dargestellt. Auch hier ist der Einfachheit halber lediglich eine der beiden Vereinzelungsscheiben dargestellt. Anders als bei der vorigen Ausführungsform sind in dieser Weiterbildung die Vereinzelungsscheiben 600a radial versetzt zur Rotationsachse der Beschleunigungseinheit 610 angeordnet, wobei die Beschleunigungseinheit jedoch weiterhin zumindest teilweise zwischen den beiden Vereinzelungsscheiben angeordnet ist. Auch hier sind die Vereinzelungsscheiben 600a mit zwei mit verschiedenen Radien entlang ihrer Umfänge angeordneten Lochreihen versehen. Durch geeignete Einhausungen der Vereinzelungsscheiben lässt sich, wie bereits in der vorigen Ausführungsform beschrieben, ein Saugdruck an den Bohrungen der Lochreihen erzielen, der dazu führt, dass die Körner einzeln an der der Beschleunigungseinheit 610 zugewandten Seite der Vereinzelungsscheiben gehalten werden.

Die Übergabe der mitgeführten, vereinzelten Körner erfolgt durch an der der Beschleunigungseinheit abgewandten Seite angeordnete, nicht mitrotierende Federelemente 631a und 632a, die in Fig. 7C im Detail dargestellt sind. Die Ausbildung der als Auswerferelemente dienenden Federelemente 631a und 632a ist dabei derart gewählt, dass mittels je eines an dem jeweiligen Federelement befestigten Stiftes von außen durch die Bohrung hindurch gestoßen werden kann, um dem auf der gegenüberliegenden Seite der Vereinzelungsscheibe gehaltenen Samenkorn einen kurzen, definierten Beschleunigungsimpuls zu geben. Die Steuerung der Federelemente 631a und 632a erfolgt in der hier dargestellten, nicht limitierenden Weiterbildung über keilförmige Elemente 633a einer entlang des Umfangs der Vereinzelungsscheibe 600a angeordneten Steuerkurve, von der in Fig. 6 lediglich zwei Keile dargestellt sind. Mit 634a ist ein fixer Anschlag bezeichnet.

Ein Auswerferkopf für Kornreste ist für diese Vorrichtung nicht unbedingt zwingend nötig, da die Federelemente die Bohrung durch stechen und so die Kornreste aus der Bohrung entfernen. Für schwierige Einsatzfälle kann ein entsprechender Abstreifer zum Entfernen der Kornreste zusätzlich vorgesehen werden.

Die Federelemente 631a und 632a sind gegen den Anschlag 634a sowie gegen die Steuerelemente (die als mit rotierende Rechtecke auf der Vereinzelungsscheibe dargestellt sind) vor gespannt. Bewegt sich eine Lücke unter dem Federelement 631a bzw. 632a, bewegt sich dieses impulsartig durch die Vorspannung in die Lücke hinein und sticht mit dem Stift durch die entsprechende Bohrung hinein und hindurch, wodurch dem anhaftenden Korn der nötige Beschleunigungsimpuls gegeben wird. Durch das Weiterdrehen der Vereinzelungsscheibe wird das Federelement weiter vorgespannt und über die feststehende Rampe ausgehoben, bis es aus der Lücke herausgezogen ist. Durch die Vorspannung schnellt es nun zurück gegen den Anschlag 634a, wo es bis zum nächsten Auftreten einer Lücke zwischen Steuerelementen verweilt.

Aufgrund des Beschleunigungsimpulses werden die Körner durch entsprechende Öffnungen 650a und 655a in der der jeweiligen Vereinzelungsscheibe 600a zugewandten Stirnseite der trommelförmigen Beschleunigungseinheit 610 gestoßen. Der Vorgang ist in Fig. 7A durch einen Pfeil dargestellt. Die Fig. 7A zeigt eine Draufsicht der Beschleunigungseinheit 610 mit versetzt angeordneten Vereinzelungsscheiben, von denen die zweite Vereinzelungsscheibe 600b nur schematisch dargestellt ist. Durch den Beschleunigungsimpuls 698 wird ein einzelnes, an der der Beschleunigungseinheit zugewandten Seite der Vereinzelungsscheibe 600a gehaltenes Korn durch die Einlassöffnung 650a bzw. 655a an die Beschleunigungseinheit 610 übergeben, welche es ihrerseits an das Schussrohr 620 weiterleitet, nachdem es durch die Rotation der Fördereinrichtung beschleunigt wurde. Auch hier sind die unterschiedlichen Druckbereiche durch die Drücke **p₁** und **p₂** gekennzeichnet, wobei aufgrund der Relation **p₂ > p₁** ein Saugdruck entsteht, der die Körner in die Bohrungen der Lochreihen drückt.

Die Einlassöffnungen 650a und 655a sind dabei derart in der Stirnseite des trommelförmigen Gehäuses der Beschleunigungseinheit 610 angeordnet, dass bei geeignetem Überlapp der zugeordneten Vereinzelungsscheibe 600a mit der Beschleunigungseinheit 610 abwechselnd Körner von den beiden Lochreihen der Vereinzelungsscheibe an die Beschleunigungseinheit übergeben werden können. Die übergebenen Körner landen nach dem Durchtritt durch die jeweilige Einlassöffnung in halboffenen Kanälen 612a-1 und 612a-2 der in dem trommelförmigen Gehäuse der Beschleunigungseinheit 610 rotierenden Fördereinrichtung 615. Wie in Fig. 7B im Detail dargestellt, können die halboffenen Kanäle 612a-1 und 612a-2 der Fördereinrichtung 615 mit verschiedenen Radien ausgebildet sein und in denselben Stichkanal 613a münden. Während die halboffenen Kanäle 612a-1 und 612a-2 parallel zur Stirnseite des Gehäuses verlaufen können, ist der Stichkanal 613a derart ausgebildet, dass die von ihm mitgenommen Körner axial zur Mitte der Beschleunigungseinheit und radial nach außen geführt werden. An der Innenfläche des Außenmantels des Gehäuses werden die Körner dann von dem offenen Ende des Stichkanals 613a soweit mitgenommen, bis dieses offene Ende die Auslassöffnung im Außenmantel des Gehäuses überstreicht. In Fig. 7B ist exemplarisch das offene Ende 614b des zur zweiten Vereinzelungsscheibe 600b gehörenden, nicht sichtbaren zweiten Stichkanals dargestellt. Durch die Auslassöffnung werden die mitgeführten Körner schließlich mit der ungefähren Umfangsgeschwindigkeit der Fördereinrichtung tangential in den sich anschließenden Schlusskanal 620 ausgeworfen.

Die in Fig. 7B dargestellte Kanäle 612a-1 und 612a-2 mit 613a erfüllen somit dieselbe Funktion eines Mitnahmeelements wie die im Zusammenhang mit Fig. 5B beschriebenen Kanäle. Auch hier können die offenen Enden 614b der den beiden Vereinzelungsscheiben zugeordneten Stichkanäle 613a sowie die entsprechenden Kanäle 612a-1 und 612a-2 um 180° in Umfangsrichtung der Fördereinrichtung versetzt angeordnet werden, sodass abwechselnd von der ersten und von der zweiten Vereinzelungsscheibe 600a bzw. 600b ein Korn in die jeweiligen Kanäle übergeben wird. Ebenso wird alternierend je ein Korn in den ersten und den zweiten Kanal 612a-1 bzw. 612a-2 übergeben. Durch die offenen Enden 614b der Fördereinrichtung 615 werden somit pro Umdrehung der Fördereinrichtung in gleichmäßigen Abständen zwei Körner in das Schussrohr abgegeben. Von derselben Lochreihe einer jeden Vereinzelungsscheibe wird daher bei jeder zweiten Umdrehung der Fördereinrichtung ein Korn übergeben. Aufgrund der zunächst parallel zur jeweiligen Stirnseite verlaufenden Kanalstücke 612a-1 und 612a-2 besteht eine ausreichende zeitliche Toleranz für diese Übergabe, da die Auswurfzeitpunkte lediglich durch die Lage der offenen Enden 614b der Stichkanäle 613a und die Rotationsfrequenz der Fördereinrichtung 615 bestimmt werden.

Auch bei dieser Ausführungsform können bei Verwendung von zwei Vereinzelungsscheiben 600a und 600b mit je zwei Lochreihen, von denen jeweils maximal 30 Körner pro Sekunde an die Beschleunigungseinheit übergeben werden können, Ablagefrequenzen von 120 Körnern pro Sekunde erreicht werden, was eine Einzelkorndosierung von Getreidesamen ermöglicht.

Es versteht sich, dass die in Fig. 7C gezeigten Federelemente zum rückwärtigen Durchstoßen der Bohrungen der Lochreihen auch in der Weiterbildung gemäß Fig. 4 eingesetzt werden können. Weitere Variationen sind denkbar, ohne vom Umfang der beigefügten Ansprüche abzuweichen. Zudem ist eine Ausbildung der Beschleunigungseinheit als Förderband denkbar, bei dem die übergebenen Körner statt einer kreisförmigen Beschleunigung eine lineare Beschleunigung erfahren. Auch in diesem Fall erlaubt die Verwendung von mehreren Vereinzelungseinheiten mit zwei oder mehr Lochreihen eine Vervielfachung der Ablagefrequenz.

## Patentansprüche

1. Einzelkornsävorrichtung zur gezielten Ablage von körnigem Gut, insbesondere von Samenkörnern und/oder Dünger, mit mindestens einer Vereinzelungseinheit (400a, 400b; 600a, 600b), die aus einem Gutstrom eine Abfolge von einzelnen Körnern erzeugt und an eine Ablageeinheit (420;
620), insbesondere an einen Säschar, weitergibt,
wobei zwischen der Vereinzelungseinheit und der Ablageeinheit eine Beschleunigungseinheit (410; 610) angeordnet ist, die die vereinzelten Körner von der Vereinzelungseinheit übernimmt, unter Rotation beschleunigt und an die Ablageeinheit weitergibt, wobei die Beschleunigungseinheit (410; 610) umfasst:
ein Gehäuse mit mindestens einer Einlassöffnung (416a, 416b; 650a, 655a) zur Übernahme der Körner von der Vereinzelungseinheit (400a, 400b; 600a, 600b);
eine Auslassöffnung zur Weitergabe der beschleunigten Körner an die Ablageeinheit (420; 620); und
eine in dem Gehäuse rotierenden Fördereinrichtung (415; 615), die dazu ausgebildet ist, die Körner einzeln von der Einlassöffnung zur Auslassöffnung zu befördern und dabei zu beschleunigen,
wobei das Gehäuse eine, insbesondere um eine Rotationsachse rotationssymmetrische, Mantelinnenfläche aufweist,
wobei die Fördereinrichtung (415; 615) um die Rotationsachse rotiert; und
wobei die Fördereinrichtung mindestens ein Mitnahmeelement (412a, 412b, 413a; 612a-1, 612a-2, 613a) aufweist, das derart ausgebildet ist, dass durch die Einlassöffnung (416a, 416b; 650a, 655a) übergebene Körner aufgrund der Rotation der Fördereinrichtung zur Mantelinnenfläche hin und / oder entlang der Mantelinnenfläche zur Auslassöffnung befördert werden,
**dadurch gekennzeichnet,**
**dass** zwei scheibenförmigen Vereinzelungseinheiten (400a, 400b; 600a, 600b) vorgesehen sind,
wobei die Fördereinrichtung (415; 615) für jede Vereinzelungseinheit ein Mitnahmeelement (412a, 412b, 413a; 612a-1, 612a-2, 613a) aufweist; und
wobei die den Vereinzelungseinheiten entsprechenden Mitnahmeelemente in Umfangsrichtung der Fördereinrichtung, insbesondere um 180°, zueinander versetzt angeordnet sind.

2. Vorrichtung nach Anspruch 1, wobei die Vereinzelungseinheit (400a, 400b; 600a, 600b) mindestens zwei Lochreihen zum Erzeugen der Abfolge von einzelnen Körnern aufweist.

3. Vorrichtung nach Anspruch 1 oder 2,
wobei zwei scheibenförmige Vereinzelungseinheiten (400a, 400b; 600a, 600b) vorgesehen sind; und
wobei die Beschleunigungseinheit (410; 610) zumindest teilweise zwischen den beiden Vereinzelungseinheiten angeordnet ist.

4. Vorrichtung nach zumindest einem der vorherigen Ansprüche,
wobei die Vereinzelungseinheiten (400a, 400b) koaxial zur Rotationsachse der Fördereinrichtung (415) angeordnet sind;
wobei das Gehäuse trommelförmig mit einem Innenmantel (418) und einem Außenmantel ausgebildet ist;
wobei die Einlassöffnungen (416a, 416b) axial versetzt an dem Innenmantel angeordnet sind; und
wobei die Mitnahmeelemente (412a, 412b, 413a) derart ausgebildet sind, dass sie die übergebenen Körner von den Einlassöffnungen axial nach innen und radial nach außen zur Innenfläche des Außenmantels befördern.

5. Vorrichtung nach zumindest einem der Ansprüche 1-3, wobei die Vereinzelungseinheiten (600a, 600b) versetzt zur Rotationsachse der Fördereinrichtung (615) angeordnet sind;
wobei das Gehäuse trommelförmig mit einem Außenmantel ausgebildet ist und für jede Lochreihe eine Einlassöffnung (650a, 655a) besitzt, die an der jeweiligen Stirnseite des Gehäuses angeordnet ist; und
wobei die Mitnahmeelemente (612a-1, 612a-2, 613a) derart ausgebildet sind, dass sie die übergebenen Körner von den Einlassöffnungen axial nach innen und radial nach außen zur Innenfläche des Außenmantels befördern.

6. Verfahren zur Vereinzelung und gezielten Ablage von körnigem Gut, insbesondere von Samenkörnern und/oder Dünger, mit den folgenden Schritten:
Erzeugen einer Abfolge von einzelnen Körnern aus einem Gutstrom mittels mindestens einer Vereinzelungseinheit (400a, 400b; 600a, 600b); und
dosiertes Ablegen einzelner Körner mittels einer Ablageeinheit (420; 620), insbesondere eines Säschars, wobei die mittels der Vereinzelungseinheit vereinzelten Körner vor dem Ablegen durch Rotation in einer Beschleunigungseinheit (410; 610) zur Saatgutablageseite hin beschleunigt werden
**dadurch gekennzeichnet,**
**dass** die Körner alternierend von einer ersten Vereinzelungseinheit (400a; 600a) und einer zweiten Vereinzelungseinheit (400b; 600b) an die Beschleunigungseinheit (410; 610) übergeben werden.

7. Verfahren nach Anspruch 6,
wobei die Vereinzelungseinheit (400a, 400b; 600a, 600b) mindestens zwei Lochreihen zum Erzeugen der Abfolge von einzelnen Körnern aufweist; und
wobei die Körner von der Vereinzelungseinheit aufgrund einer Druckdifferenz an den Lochreihen aus dem Gutstrom aufgenommen werden.

8. Verfahren nach einem der Ansprüche 6 oder 7, wobei die Körner in der Beschleunigungseinheit (410; 610) durch Rotation einer Fördereinrichtung (415, 615) beschleunigt werden; und wobei pro Umdrehung der Fördereinrichtung je ein einzelnes Korn von jeder Vereinzelungseinheit aufgenommen wird.

9. Verfahren nach zumindest einem der Ansprüche 6 bis 8, wobei alternierend Körner von zwei Vereinzelungseinheiten (400a, 400b; 600a, 600b) mit je zwei Lochreihen an die Beschleunigungseinheit (410; 610) übergeben werden, so dass mindestens 120 Körner pro Sekunde abgelegt werden.

## Claims

1. Single-grain seeder for the targeted depositing of granular material, in particular seeds and/or fertilizer, with at least one singulating unit (400a, 400b; 600a, 600b) which produces a sequence of individual grains from a flow of material and forwards same to a depositing unit (420; 620), in particular to a sowing coulter, wherein an acceleration unit (410; 610) is arranged between the singulating unit and the depositing unit, the acceleration unit taking over the singulated grains from the singulating unit, accelerating the grains under rotation and forwarding them to the depositing unit, wherein the acceleration unit (410; 610) comprises: a housing with at least one inlet opening (416a, 416b; 650a, 655a) for taking over the grains from the singulating unit (400a, 400b; 600a, 600b); an outlet opening for forwarding the accelerated grains to the depositing unit (420; 620); and a conveying device (415; 615) which rotates in the housing and is designed to convey the grains individually from the inlet opening to the outlet opening and to accelerate them in the process, wherein the housing has a casing inner surface which is in particular rotationally symmetrical about an axis of rotation, wherein the conveying device (415; 615) rotates about the axis of rotation; and wherein the conveying device has at least one carry-along element (412a, 412b, 413a; 612a-1, 612a-2, 613a) which is designed in such a manner that grains transferred through the inlet opening (416a, 416b; 650a, 655a) are conveyed towards the casing inner surface and/or along the casing inner surface to the outlet opening because of the rotation of the conveying device, **characterized in that** two disc-shaped singulating units (400a, 400b; 600a, 600b) are provided, wherein the conveying device (415; 615) has a carry-along element (412a, 412b, 413a; 612a-1, 612a-2, 613a) for each singulating unit; and wherein the carry-along elements corresponding to the singulating units are arranged offset with respect to one another, in particular by 180°, in the circumferential direction of the conveying device.

2. Device according to Claim 1, wherein the singulating unit (400a, 400b; 600a, 600b) has at least two rows of holes for producing the sequence of individual grains.

3. Device according to Claim 1 or 2, wherein two disc-shaped singulating units (400a, 400b; 600a, 600b) are provided; and wherein the acceleration unit (410; 610) is at least partially arranged between the two singulating units.

4. Device according to at least one of the preceding claims, wherein the singulating units (400a, 400b) are arranged coaxially with respect to the axis of rotation of the conveying device (415); wherein the housing is of drum-shaped design with an inner casing (418) and an outer casing; wherein the inlet openings (416a, 416b) are arranged axially offset on the inner casing; and wherein the carry-along elements (412a, 412b, 413a) are designed in such a manner that they convey the transferred grains axially inwards and radially outwards from the inlet openings to the inner surface of the outer casing.

5. Device according to at least one of Claims 1-3, wherein the singulating units (600a, 600b) are arranged offset with respect to the axis of rotation of the conveying device (615); wherein the housing is of drum-shaped design with an outer casing and, for each row of holes, has an inlet opening (650a, 655a) which is arranged on the respective end side of the housing; and wherein the carry-along elements (612a-1, 612a-2, 613a) are designed in such a manner that they convey the transferred grains axially inwards and radially outwards from the inlet openings to the inner surface of the outer casing.

6. Method for the singulating and targeted deposition of granular material, in particular seeds and/or fertilizer, with the following steps: producing a sequence of individual grains from a flow of material by means of at least one singulating unit (400a, 400b; 600a, 600b); and metered depositing of individual grains by means of a depositing unit (420; 620), in particular a sowing coulter, wherein the grains singulated by means of the singulating unit are accelerated towards the seed-depositing side by rotation in an acceleration unit (410; 610) prior to the depositing, **characterized in that** the grains are transferred in an alternating manner to the acceleration unit (410; 610) from a first singulating unit (400a; 600a) and a second singulating unit (400b; 600b).

7. Method according to Claim 6, wherein the singulating unit (400a, 400b; 600a, 600b) has at least two rows of holes for producing the sequence of individual grains; and wherein the grains are picked up from the flow of material by the singulating unit because of a difference in pressure at the rows of holes.

8. Method according to either of Claims 6 and 7, wherein the grains are accelerated in the acceleration unit (410; 610) by rotation of a conveying device (415, 615); and wherein an individual grain in each case is picked up by each singulating unit per revolution of the conveying device.

9. Method according to at least one of Claims 6 to 8, wherein grains are transferred in an alternating manner to the acceleration unit (410; 610) from two singulating units (400a, 400b; 600a, 600b) each having two rows of holes, and therefore at least 120 grains are deposited per second.

## Revendications

1. Ensemble pour semer grain par grain, servant à poser de manière contrôlée un produit granulaire, en particulier des graines de semence et/ou des engrais, et présentant
au moins une unité d'égrènement (400a, 400b: 600a, 600b) qui forme à partir d'un écoulement de produit une succession de grains individuels et les transfère à une unité de pose (420; 620), en particulier un soc à semer,
une unité d'accélération (410; 610) qui reprend les grains individuellement de l'unité d'égrènement et qui les accélère en rotation et les transfère à l'unité de pose, l'unité d'accélération (410; 610) étant disposée entre l'unité d'égrènement et l'unité de pose, l'unité de pose (410; 610) comportant :
un boîtier présentant au moins une ouverture d'entrée (416a, 416b; 650a, 655a) qui reprend les grains provenant de l'unité d'égrènement (400a, 400b; 600a, 600b),
une ouverture de sortie qui transfère à l'unité de pose (420; 620) les grains accélérés et
un dispositif de transport (415; 615) tournant dans le boîtier et configuré pour transporter les grains un à un depuis l'ouverture d'entrée jusqu'à l'ouverture de sortie et ainsi les accélérer,
le boîtier présentant une surface intérieure d'enveloppe, en particulier symétrique en rotation par rapport à un axe de rotation,
le dispositif de transport (415; 615) tournant autour de l'axe de rotation et
le dispositif de transport présentant au moins un élément d'entraînement (412a, 412b, 413a; 612a-1, 612a-2, 613a) configuré de telle sorte que les grains transférés par l'ouverture d'entrée (416a, 416b; 650a, 655a) soient transportés en va-et-vient le long de la surface intérieure d'enveloppe en direction de l'ouverture de sortie grâce à la rotation du dispositif de transport,
**caractérisé en ce que**
deux unités d'égrènement (400a, 400b; 600a, 600b) en forme de disque sont prévues,
**en ce que** le dispositif de transport (415; 615) présente pour chaque unité d'égrènement un élément d'entraînement (412a, 412b, 413a; 612a-1, 612a-2, 613a) et
**en ce que** les éléments d'entraînement qui correspondent aux unités d'égrènement sont disposés à un décalage mutuel dans la direction périphérique du dispositif de transport, et en particulier à un décalage de 180°.

2. Ensemble selon la revendication 1, dans lequel l'unité d'égrènement (400a, 400b; 600a, 600b) présente au moins deux rangées de trous qui forment la succession des grains individuels.

3. Ensemble selon les revendications 1 ou 2, dans lequel deux unités d'égrènement (400a, 400b; 600a, 600b) en forme de disque sont prévues, l'unité d'accélération (410; 610) étant disposée au moins en partie entre les deux unités d'égrènement.

4. Ensemble selon au moins l'une des revendications précédentes, dans lequel les unités d'égrènement (400a, 400b) sont disposées coaxialement par rapport à l'axe de rotation du dispositif de transport (415), le boîtier ayant la forme d'un tambour doté d'une enveloppe intérieure (418) et d'une enveloppe extérieure, les ouvertures d'entrée (416a, 416b) étant disposées à un décalage axial sur l'enveloppe intérieure et les éléments d'entraînement (412a, 412b, 413a) étant configurés de manière à transporter axialement vers l'intérieur et radialement vers l'extérieur en direction de la surface intérieure de l'enveloppe extérieure les grains transférés depuis les ouvertures d'entrée.

5. Ensemble selon au moins l'une des revendications 1 à 3, dans lequel les unités d'égrènement (600a, 600b) sont disposées à un décalage par rapport à l'axe de rotation du dispositif de transport (615),
le boîtier présentant la forme d'un tambour doté d'une enveloppe extérieure et possédant pour chaque rangée de trous une ouverture d'entrée (650a, 655a) disposée sur le côté frontal correspondant du boîtier et
les éléments d'entraînement (612a-1, 612a-2, 613a) étant configurés de manière à transporter axialement vers l'intérieur et radialement vers l'extérieur en direction de la surface intérieure de l'enveloppe extérieure les grains transférés depuis les ouvertures d'entrée.

6. Procédé d'égrènement et de pose contrôlés d'un produit granulaire, en particulier de graines de semences et/ou d'engrais, le procédé présentant les étapes suivantes :
formation d'une succession de grains individuels à partir d'un écoulement de produit, au moyen d'au moins une unité d'égrènement (400a, 400b; 600a, 600b),
pose dosée des grains individuels au moyen d'une unité de pose (420; 620), en particulier d'un soc à semer,
les grains égrenés au moyen de l'unité d'égrènement étant accélérés en direction du côté de pose du produit de semences par la rotation dans une unité d'accélération (410; 610),
**caractérisé en ce que**
les grains sont transférés en alternance depuis une première unité d'égrènement (400a; 600a) et une deuxième unité d'égrènement (400b; 600b) à l'unité d'accélération (410; 610).

7. Procédé selon la revendication 6, dans lequel l'unité d'égrènement (400a, 400b; 600a, 600b) présente au moins deux rangées de trous pour former la succession de grains individuels, les grains étant prélevés dans l'écoulement de produit par l'unité d'égrènement grâce à une différence de pression sur les rangées de trous.

8. Procédé selon l'une des revendications 6 ou 7, dans lequel les grains sont accélérés dans l'unité d'accélération (410; 610) par la rotation d'un dispositif de transport (415, 615), un grain individuel étant repris par chaque unité d'égrènement lors de chaque rotation du dispositif de transport.

9. Procédé selon l'une des revendications 6 à 8, dans lequel des grains provenant de deux unités d'égrènement (400a, 400b; 600a, 600b) sont transférés par deux rangées de trous à l'unité d'accélération (410; 610) de manière à déposer au moins 120 grains par seconde.
